# EUROPÄISCHE PATENTSCHRIFT

(11) **EP 1 556 311 B1**
(45) Veröffentlichungstag und Bekanntmachung des Hinweises auf die Patenterteilung: **17.05.2006**
(21) Anmeldenummer: 03775228.4
(22) Anmeldetag: 24.10.2003
(51) Int. Cl.: C03C 21/00, C03C 23/00

(54) **BESCHICHTUNGSZUSAMMENSETZUNG, INSBESONDERE FÜR GLASOBERFLÄCHEN, UND VERFAHREN ZU DEREN HERSTELLUNG UND VERWENDUNG**
COATING COMPOSITION, PARTICULARLY FOR GLASS SURFACES, AND METHODS FOR THE PRODUCTION AND USE THEREOF
COMPOSITION DE REVETEMENT, NOTAMMENT POUR DES SURFACES EN VERRE, ET PROCEDES DE REALISATION ET D'UTILISATION ASSOCIES

(30) Priorität: 29.10.2002 DE 10250408
(43) Veröffentlichungstag der Anmeldung: 27.07.2005
(73) Patentinhaber: Boraglas GmbH, 06120 Halle/Saale (DE)
(72) Erfinder: GAHLER, Siegfried, 06766 Wolfen (DE); MEIER, Frank, 06128 Halle (DE); MÜLLER, Hans-Jürgen, 06792 Sandersdorf (DE); RAINER, Thomas, 38855 Wernigerode (DE); BOREK, Reinhard, 06110 Halle (DE); SCHNEIDER, Jochen, 06132 Halle (DE); HEIMRICH, Stefanie, 06217 Merseburg (DE)
(74) Vertreter: Hertz, Oliver
(86) Internationale Anmeldenummer: PCT/EP2003/011817
(87) Internationale Veröffentlichungsnummer: WO 2004/039740

(56) Entgegenhaltungen:
- EP-A- 1 110 921
- DD-A- 215 776
- US-A- 5 078 771
- US-A- 5 285 517
- US-B1- 6 262 389
- RAINER T ET AL: "FARBIGE INNENBESCHRIFTUNG VON FLOATGLAS DURCH CO2-LASER BESTRAHLUNG" , GLASTECHNISCHE TAGUNG. KURZREFERATE, XX, XX, PAGE(S) 127-130 XP001117571 Seite 127, Absätze 1-3

## Beschreibung

Die Erfindung betrifft Beschichtungszusammensetzungen, insbesondere zur lasergestützten Bearbeitung (insbesondere Beschriftung) von Glasoberflächen, Verfahren zur Beschichtung von Glasoberflächen und Verfahren zur Herstellung derartiger Beschichtungszusammensetzungen.

Verfahren zur Beschriftung auf oder in Gläsern sind allgemein bekannt. So können beispielsweise Beschriftungen von Glasoberflächen durch Druck-, Klebe- oder Ätzverfahren gebildet werden. Solche Beschriftungen verändern jedoch die Glasoberfläche, oder die Beschriftungen sind gegen äußere mechanische Einflüsse wenig stabil. Beschriftungen im Glasinneren erfolgen gemäß DD 215 776 durch Aufbringen von Diffusions- oder Dispersionsfarben auf die Glasoberfläche und anschließendes mehrstündiges Tempern. Solche Diffusionsfarben oder Pigmente, die häufig aus silberhaltigen Präparaten bestehen, können sich auch in Abziehbildern befinden, die vor der Temperung auf das zu beschriftende Glas aufgeklebt werden. Durch die Temperung tritt die Diffusion des Farbpigments in das Glas ein und führt dort zu einer gelben bis dunkelbraunen transparenten Aufzeichnung im Glasinneren. Solche Temperungen, die auch mittels infraroter Laserbestrahlung durchgeführt werden können, erfordern aber das Erreichen von Temperaturen, die über der Transformationstemperatur der Gläser liegen müssen, damit sich durch die eintretenden Glasaufschmelzungen die verwendeten Pigmente in der Glasoberfläche verankern können. Das führt wiederum zu Unebenheiten, Trübungen oder zu Verzerrungen der durchzuführenden Aufzeichnung in den Gläsern, wodurch die Anwendbarkeit dieser Verfahren stark eingeschränkt ist.

Diese Nachteile können durch ein Verfahren zum laserstrahlgestützten Eintrag von Metallionen in Glas zur Erzeugung von farblosen und farbigen Pixeln umgangen werden. Dieses Verfahren, das in den unveröffentlichten Patentanmeldungen DE 101 19 302.5 und PCT/EP02/04 284 beschrieben ist, arbeitet bei Temperaturen unter der Transformationstemperatur der Gläser. Es ermöglicht die Bildung von Silberbeschriftungen oder von Silberbildern in Gläsern. Allerdings erfordert diese Technik, entsprechende Silberverbindungen vor der Laserbestrahlung direkt auf dem Glas zu deponieren. Dafür gibt es bisher noch keine geeigneten Techniken. Die oben erwähnten Diffusionsfarben oder Diffusionpigmente sind für diese Deposition nicht geeignet, da die Diffusion des Farbpigments in das Glas Temperaturen, die über der Transformationstemperatur der Gläser liegen müssen, bedingen.

Die Herstellung von silberhaltigen Schichten aus wässrigen Lösungen ist aus der Silberhalogenidphotographie allgemein bekannt. Die silberhaltigen Schichten müssen lichtempfindliche, in Wasser und anderen Lösungsmitteln nahezu unlösliche Silberhalogenide in einer geeigneten Bindemittel-Matrix enthalten, damit Vermischungsprozesse bei ihrer Herstellung ausgeschlossen und nachfolgende fotografische Verarbeitungsschritte ermöglicht werden. Diese Schichten zeichnen sich durch ungelöste Silberhalogenide und einen besonders hohen Bindemittelgehalt aus, so dass sie für die vorliegenden Glas-Beschichtungsaufgaben nur eingeschränkt geeignet sind. Nachteilig ist auch, dass die zur Herstellung fotografischer Silberhalogenid-Gelatineschichten üblichen technologischen Prozesse an den hohen Bindemittelgehalt gebunden sind.

Es ist Aufgabe der Erfindung, verbesserte Beschichtungszusammensetzungen, insbesondere für Gläser bereitzustellen, die einen erweiterten Anwendungsbereich, insbesondere für möglichst alle Applizierungsmöglichkeiten von Beschichtungsmedien für die lasergestützte Beschriftung von Gläsern, besitzt. Die Aufgabe der Erfindung ist es auch, Verfahren zur Herstellung derartiger Beschichtungszusammensetzungen bereitzustellen.

Diese Aufgaben werden mit Beschichtungszusammensetzungen und Verfahren mit den Merkmalen gemäß den Patentansprüchen 1, 12 und 18 gelöst. Vorteilhafte Ausführungsformen der Erfindung ergeben sich aus den abhängigen Ansprüchen.

Eine Grundidee der Erfindung ist es, eine Beschichtungszusammensetzung, insbesondere für eine lasergestützten Bearbeitung von Glasoberflächen, bereitzustellen, die mindestens eine Silberverbindung, die in einem wässrigen und/oder organischen Lösungsmittel lösbar ist, und mindestens ein Bindemittel enthält. Gegenstände der Erfindung sind Beschichtungszusammensetzungen sowohl im flüssigen Zustand, in dem sie noch Lösungsmittel enthalten, als auch im festen Zustand, in dem das Lösungsmittel entzogen worden ist. Im Unterschied zu den so genannten photographischen Emulsionen enthalten erfindungsgemäße Beschichtungszusammensetzungen zur Bildung der für das Laserbeschriftungsverfahren notwendigen Schichten lösliche Silberverbindungen. Damit werden die Ionen bereitgestellt, die bei Laserbestrahlung in das Glas diffundieren und erst dort zu Clustern reduziert werden, deren Gesamtheit die gewünschte Bildwirkung erzeugt. Des Weiteren enthalten erfindungsgemäße Beschichtungszusammensetzungen ein Bindemittel, mit dem die Schichtbildung verbessert wird.

Vorteilhafterweise können durch die erfindungsgemäßen Beschichtungszusammensetzungen die besonderen Anforderungen der verschiedensten Auftragsverfahren erfüllt werden, die an die verwendeten Medien beim Aufbringen von insbesondere silberhaltigen Medien, beispielsweise Lösungen von Silberverbindungen, auf Gläser gestellt werden. So wird beispielsweise die Benetzbarkeit der hydrophoben Glasoberfläche bereitgestellt, um eine gleichmäßige Schicht erzeugen zu können. Wenn geneigt stehende Gläser beschriftet werden sollen, so können die verwendeten Medien mit einer ausreichend hohen Viskosität ausgestattet werden und einen pastenartigen Charakter besitzen. Wenn die Metallverbindungen durch Aufsprühen geeigneter Lösungen aufgebracht werden sollen, können erfindungsgemäße Beschichtungszusammensetzungen durch Wahl geeigneter Lösungsmittel oder Lösungsmittelgemische insbesondere für die Silberverbindungen besonders an das Auftragsverfahren angepasst werden, wobei die vorher genannten Anforderungen hinsichtlich der Benetzbarkeit der Glasoberflächen erfüllt werden können. Ferner können die Lösungsmittel beim Prozess des Aufsprühens hinsichtlich ihrer Verdampfungsgeschwindigkeit so aufeinander abgestimmt werden, dass auf geneigten Glasflächen ein Verlaufen in senkrechter Richtung vermieden wird.

Gemäß bevorzugten Ausführungsformen der Erfindung umfasst die Beschichtungszusammensetzung mindestens eine Silberverbindung und mindestens eine zusätzliche Metallverbindung, z. B. eine Zirkoniumverbindung. Daraus können sich Vorteile für eine besonders kontrastreiche Schwärzungswirkung oder Einfärbung des behandelten.Glases ergeben. Die Kombination von Silber- mit anderen Metallverbindungen, wie etwa Zirkoniumverbindungen, kann für die im Glas erreichte Bilddichte von Vorteil sein.

Zur Förderung der Clusterbildung kann die Beschichtungszusammensetzung vorteilhafterweise mindestens ein Reduktionsmittel enthalten, mit dem Metallionen der mindestens einen Metallverbindung (insbesondere Silberverbindung) reduzierbar sind. Reduktionsmittel umfassen vorzugsweise Kupfer(I)- und/oder Zinn(II)- und/oder Eisen(II)- und/oder Blei(II)- und/oder Kobalt(II)- und/oder Titan(II)- und/oder Komplexsysteme wie Iridium(II)hexachlorid und/oder Cyanoferrate(II). Die Reduktionsmittel sind in der Lage, je nach den gewählten Umständen bei der Laserbestrahlung mit in das Glas zu diffundieren und dort den Reduktionsprozess der Silberionen zu verstärken, die Clusterzahl oder -form der erzeugten Silberaggregate zu erhöhen, oder in Richtung einer höheren Lichtabsorptionsfähigkeit zu verändern.

Weitere Vorteile in Bezug auf die Bildung besonders homogener und stabiler Schichten können sich ergeben, wenn die Beschichtungszusammensetzung mindestens eine Zusatzsubstanz enthält, mit der die Viskosität, das Volumen, die Trocknungs- und Verdampfungsgeschwindigkeit, die Benetzbarkeit und/oder die Haltbarkeit der Beschichtungszusammensetzung beeinflussbar ist. Beispiele dafür sind Desinfektionsmittel im Falle der Verwendung von Gelatine als Bindemittelmatrix, oder Verlaufsmittel, um eine gute und rasche Spreitung des auf die Unterlage aufgebrachten Beschichtungsmediums zu sichern, oder Viskositätssteigerer und Antiabsetzverbindungen, die zu einer besseren Haltbarkeit des Beschichtungsmediums führen und einer Entmischung entgegenwirken, und im Falle der Anwendung der Beschichtungsmedien als Paste eine bessere Schichtgleichmäßigkeit bewirken.

Der Zusatz von Trocknungsregulatoren, wie etwa Silane, tragen zu einer Verbesserung der Gleichmäßigkeit der aufgetragenen Schicht bei.

Weitere Vorteile in Bezug auf die Bild- oder Schriftgebung können sich ergeben, wenn die Beschichtungszusammensetzung Zusätze von Farbstoffen und/oder Pigmenten und/oder von Haftverbesserern und/oder Netzmitteln enthält. Mit Farbstoffen oder Pigmenten kann die Erkennbarkeit einer auf das Glas aufgebrachten Schicht erhöht werden. Ferner können, beispielsweise um die Oberflächenspannung der Beschichtungsmedien möglichst niedrig zu halten und eine Beschichtung ohne Benetzungsstörungen auf der Glas- oder Folienoberfläche realisieren zu können, in den Beschichtungsgemischen Netzmittel und Haftverbesserer verwendet werden. Als solche können alle an sich von photographischen Emulsionen oder aus anderen Bereichen der Beschichtungstechnik her bekannten Netzmittel wie beispielsweise Fluortenside, Dismulgane, höhermolekulare Alkylarylether, Polyethylenglykole usw. verwendet werden.

Wichtige Merkmale der erfindungsgemäßen Beschichtungszusammensetzung bestehen in der Einstellung eines bestimmten Silberverbindung-Bindemittel-Gewichtsverhältnisses, das je nach der praktischen Auftragsart gewählt wird.

Im Verhältnis zur Silberverbindung ist nur eine möglichst geringe Bindemittelmenge enthalten, damit der Laserstrahl durch das Bindemittel möglichst wenig absorbiert wird und seine Energie in möglichst hohem Maße für das Einbringen der Metallionen in das Glasgefüge zur Verfügung steht. Für den Fall, dass die Beschichtungsmedien für die Anwendung vorher auf Trägerfolien aufgetragen werden, sollte deren Absorption für das verwendete Laserlicht ebenfalls möglichst gering sein.

Der Bindemittelgehalt in den erfindungsgemäßen Beschichtungszusammensetzungen oder Beschichtungsmedien für das lasergestützte Bearbeitungsverfahren ist so niedrig, dass die bei der Herstellung fotografischer Silberhalogenid-Gelatineschichten üblichen technologischen Prozesse nur in sehr geringem Umfang eingesetzt werden können. Die Beschichtungsmedien mit einem derart geringen Bindemittelgehalt sind beispielsweise bei Einsatz von Gelatine als Bindemittel nicht mehr in der Lage nach dem Aufbringen auf die Folie durch rasches und starkes Abkühlen zum Erstarren gebracht werden zu können. Es werden daher andere Aufbringungsverfahren angewendet, die jeweils andere Bindemittelgehalte erfordern beziehungsweise möglich machen.

Die eingesetzten Bindemittelmengen bei dem vorgeschlagenen Verfahren müssen deshalb wesentlich geringer sein als bei fotografischen Emulsionen, um einen möglichst engen Kontakt der Silberverbindung mit der Glasoberfläche zu gewährleisten. Die verwendeten Bindemittelmengen müssen dafür lediglich in einer solchen Menge vorhanden sein, dass durch die Bindemittelmatrix die Haftung der Silberverbindungen und anderer in den Beschichtungsmedien enthaltenen Verbindungen mit der Glasoberfläche sicher gestellt ist. Dazu genügen je nach den verwendeten Bindemitteln und dem angewendeten Beschichtungsverfahren Silberverbindung-Bindemittel-Verhältnisse von 100 bis 8000, d.h. pro Gewichtsteil Silberverbindung (z. B. Silberverbindung) kommen nur 1/100. bis 1/8000. Gewichtsteile Bindemittel oder noch weniger zur Anwendung. Für den Fall, dass die Beschichtungsmedium für die Anwendung auf Folien aufgetragen werden sollen, muss gewährleistet sein, dass eine ausreichend gute und gleichmäßige Schichtbildung eintritt. Für diesen Fall können die Silberverbindung-Bindemittel-Verhältnisse niedriger sein und im Bereich von 0,05 bis 1000 liegen. Für den Fall, dass nach der Beschichtung auf Folien die Schicht vor der Anwendung, d.h. vor der Auftragung auf das durch Laserbestrahlung zu beschriftende Glas, von der Folie abgezogen werden soll, müssen diese abgezogenen Schichten eine ausreichend gute mechanische Stabilität besitzen, was günstigerweise Verhältnisse im Bereich von 0,05 bis 10 erfordert.

Das Silberverbindung-Bindemittel-Gewichtsverhältnis wird somit je nach dem geplanten Anwendungsverfahren vorzugsweise im Bereich von 0,05 bis 8000, insbesondere im Bereich von 1 bis 4000, gewählt. Diese Intervalle stellen relativ große Bereiche dar, wodurch ein weiterer Vorteil der Erfindung gegeben ist,

Ein weiterer Gegenstand der Erfindung ist ein Verfahren zur lasergestützten Bearbeitung einer Glasoberfläche, mit den Schritten Beschichtung der Glasoberfläche mit der oben beschriebenen Beschichtungszusammensetzung und Bestrahlung der beschichteten Glasoberfläche mit Laserstrahlung entsprechend einem vorbestimmten Bestrahlungsmuster bestehend aus bestrahlten und nicht bestrahlten Bereichen derart, dass in den bestrahlten Bereichen Silberionen in die Glasoberfläche diffundieren. Das Bestrahlungsmuster kann beispielsweise eine Schrift, ein Bild wie von einer photographisch aufgenommenen Szene und/oder eine anderweitige Graphik umfassen.

Die Bildgebung oder Beschriftung durch Bestrahlung der beschichteten Glasoberfläche mit Laserstrahlung und punkt- oder bereichsweise Erzeugung von farblosen und farbigen (insbesondere geschwärzten) Pixeln erfolgt vorzugsweise nach den in den unveröffentlichten Patentanmeldungen DE 101 19 302.5 und PCT/EP02/04 284 beschriebenen Verfahren. In Bezug auf Einzelheiten werden diese Schriften durch Bezugnahme in die vorliegende Beschreibung aufgenommen.

Als beschichtetes Glas wird je nach Anwendung klares Glas, milchig weißes oder an sich vorgefärbtes Glas verwendet. Vorteilhafterweise ist die erfindungsgemäße Bildgebung oder Beschriftung nicht verwisch- oder verwitterbar. Änderungen der in das Glas eingeschriebenen Informationen sind nur durch eine Zerstörung des Glasverbundes möglich.

Gemäß einer ersten Ausführungsform des erfindungsgemäßen Verfahrens erfolgt die Beschichtung der Glasoberfläche durch einen Auftrag (Deposition) der Beschichtungszusammensetzung im flüssig gelösten Zustand, vorzugsweise durch ein Aufsprühen, Ausgießen, Aufwalzen oder Aufrakeln. Vorteilhafterweise können dadurch gekrümmte und verwinkelte Oberflächen gleichmäßig beschichtet werden.

Gemäß einer weiteren Ausführungsform des erfindungsgemäßen Verfahrens erfolgt die Beschichtung durch einen Auftrag der Beschichtungszusammensetzung im festen Schichtzustand. Der Auftrag der Beschichtungszusammensetzung kann ein Anhaften einer selbsttragenden Folie der Beschichtungszusammensetzung (Dicke z. B. 5 µm oder größer) auf der Glasoberfläche oder eines Verbundes aus der Beschichtungszusammensetzung und einer Trägerfolie auf der Glasoberfläche umfasst. Im ersten Fall erfolgt die Herstellung von Schichten auf Trägerfolien, die von der Trägerfolie abziehbar sind und direkt auf das Glas ohne die Laserlicht absorbierende Folie appliziert und nach der Laserbestrahlung, wie die Schichten auf Folie, wieder leicht vom Glas abgezogen werden können. Im zweiten Fall wird die Trägerfolie nach der Bestrahlung von der Glasoberfläche abgezogen.

Eine vorteilhafte Methode für das Aufbringen der Silberverbindungen besteht somit insbesondere in der Herstellung von silberhaltigen Schichten auf Folien, die anschließend leicht auf Gläser in jeder beliebigen Lage appliziert werden können. Hierzu liefert die Erfindung insbesondere silberhaltige Beschichtungsmedien, die auf die Folie aufgebracht werden können. Der Vorteil dieser Art der technologischen Anwendung besteht darin, dass nach der Laserbestrahlung die Folie wieder leicht von der Glasoberfläche abgezogen werden kann.

Nach den vorher geschilderten Anwendungen werden die auf das Glas aufgetragenen Lösungen, bzw. Pasten nach der Laserbestrahlung abgewaschen, was eine gute Entfernbarkeit der aufgetragenen Beschichtungsmedien, beispielsweise durch Abwaschen, erfordert. Auch in Bezug auf einen wirksamen Abtrag durch Abwaschen können die Bindemittel optimiert werden.

Für den Fall der Anwendung der Beschichtungsmedien nach dem Sprühverfahren können Lösungsmittel bzw. Lösungsmittelkombinationen gewählt werden, die einerseits hinsichtlich ihres Lösungsvermögens einen ausreichend hohen Gehalt an Silberverbindungen zulassen und andererseits auch die verwendeten Bindemittel nicht ausflocken, sondern ihre vollständige oder kolloidale Lösung ermöglichen. Je nach dem gewählten Bindemittel können das beispielsweise Wasser, Alkohole, Ketone oder Ether und ihre Mischungen sein.

Als Bindemittel können beispielsweise die von der Herstellung fotografischer Emulsionen her bekannten natürlichen Polymere, wie z. B. Gelatine, Casein, Albumin, Polysaccharide, oder künstliche Polymere, wie z. B. Polyethylenglykole, Polyvinylalkohole, Polyvinylpyrrolidone, Celluloseactate, Polyvinylformale und -butyrale, Polystyrole, Copolymere aus Vinylchlorid und Vinylacetat, Hyaluronsäure usw. eingesetzt werden. Es können alternativ Gemische aus mehreren Bindemitteln verwendet werden.

Als Silberverbindungen sind diejenigen verwendbar, die eine hohe Löslichkeit in Wasser oder organischen Lösungsmitteln besitzen, wie etwa Silbernitrat, Silberfluorid, Silberacetet, Silberchlorat, Silberperchlorat, Silberzitrat usw. Die verwendeten Lösungsmittel können dabei je nach dem Anwendungsfall so aufeinander abgestimmt sein, dass die Silberverbindungen gelöst bleiben.

Je nach Auftragsverfahren wird bevorzugt, wenn die Lösungsmittel neben der Lösungsfähigkeit für die Silbersalze und Bindemittel (Polymere) untereinander mischbar sein. Für den Fall der Anwendung der Beschichtungsmedien im Sprühverfahren mit Zwei- oder Mehrfachdüsentechnik ist diese Mischbarkeit in geringerem Maße erforderlich.

Für den Fall des Einsatzes von Folien für das Beschriftungsverfahren können beispielsweise Folien aus Polycarbonat, Polyethylen, Polyethylenterephthalat, Polyethylennaphthalat, Cellulosetriacetat, Polyvinylchlorid, Polypropylene usw. verwendet werden. Vorteilhaft dabei ist eine möglichst niedrige Folienstärke, um eine hohe Anschmiegsamkeit an das Glas und damit einen möglichst engen Kontakt von Silberschicht und Glas zu erreichen.

Bei dem Verfahren unter Anwendung von Folien wie auch bei den anderen genannten Auftragungsarten der Beschichtungsmedien auf die Glasoberfläche ist eine möglichst rasche Trocknung der aufgebrachten Beschichtungsmedien vorteilhaft. Hierzu erfolgt eine Abstimmung zwischen dem Gehalt an Lösungsmitteln in dem Beschichtungsmedium, der Auftragsgeschwindigkeit und -menge, der Schichtstärke und der Verdampfungsgeschwindigkeit der Lösungsmittel durch an sich bekannte technologische Maßnahmen. Die Verdampfungsgeschwindigkeit ist möglichst hoch einzustellen. Das erfordert eine rasche Erwärmung der aufgebrachten Schicht ohne dass Blasenbildung durch verdampfendes Lösungsmittel eintritt und eine rasche Abführung des verdampften Lösungsmittels durch geeignete Luftführung.

Die technologischen Bedingungen sollten ferner so gewählt werden, dass die Trocknungsgeschwindigkeit höher ist als die Kristallisationsgeschwindigkeit der gelösten Silberverbindungen, um möglichst kleine Kristalle der Silberverbindungen in der Silberschicht auf dem Glas oder auf den verwendeten Folien zu erhalten. Kleine Kristalle der Silberverbindungen tragen wesentlich dazu bei, dass der Kontakt zur Glasoberfläche möglichst innig sein kann.

Ein weiterer Gegenstand der Erfindung ist ein Verfahren zur Herstellung der oben beschriebenen Beschichtungszusammensetzung, mit den Schritten Bereitstellung eines Gemisches aus einer ersten Lösung der mindestens einen Silberverbindung in einem wässrigen und/oder organischen Lösungsmittel, und einer zweiten Lösung des mindestens einen Bindemittels in einem wässrigen und/oder organischen Lösungsmittel, und Beschichtung einer Trägeroberfläche mit dem Gemisch mit nachfolgendem Lösungsmittelentzug.

### Ausführungsbeispiele für die Herstellung erfindungsgemäßer Beschichtungsmedien

### Beispiel 1

Lösung A : 20 g Gelatine werden in 100 ml Wasser bei Zimmertemperatur 2 Stunden gequollen und anschließend bei 60°C unter Rühren gelöst.
Lösung B : 20 g Silbernitrat werden bei Zimmertemperatur in 100 ml destilliertem Wasser gelöst.
Lösung C : 10 g Polyethylenglykol mit dem mittleren Molekulargewicht 1000 werden 2 Stunden bei Zimmertemperatur in 100 ml Wasser gequollen und anschließend durch Erwärmen auf 50°C unter Rühren gelöst.
Lösung D : 10 g Polyalkylsulfon werden in 100 ml Ethanol gelöst.

Zu 5 ml Lösung A werden bei Zimmertemperatur 50 ml Lösung B hinzugefügt und gut vermischt. Zu dieser Mischung fügt man unter Rühren 5 ml Lösung C hinzu. Des Weiteren wird 1 ml von Lösung D als Netzmittel zugesetzt. Nach einer Rührzeit von 5 Minuten ist das Beschichtungsmedium mit einem Verhältnis von Silberverbindung zu Bindemittel von 6,67 : 1 für den Einsatz bereit.

Es kann bei einer Temperatur von 70°C auf eine Polyterephthalatfolie mit einer Naßschichtdicke von 50 µm in horizontaler Lage aufgebracht und mit Warmluft getrocknet und zur Laserbestrahlung auf geeignete Gläser appliziert werden. In dem Glas entsteht eine Aufzeichnung, die dem gesteuerten Laserstrahl entspricht.

### Beispiel 2

Lösung A : 10 g Silbernitrat werden bei Zimmertemperatur in 100 ml destilliertem Wasser gelöst.

Lösung B : 0,5 g Polyethylenglykol mit dem mittleren Molekulargewicht von 800 000 werden bei Zimmertemperatur in 100 ml 1-Methoxy-2-propanol 1 Stunde angequollen und anschließend unter Rührung durch Erwärmen auf 60°C zu einem Kolloid gelöst. Lösung C : 10 ml Alkylphenylpolyethylenglykol werden mit Ethanol zu 100 ml gelöst.

Zur Herstellung des Beschichtungsmediums werden 12 ml Lösung A und 7,5 ml Lösung B bei 70° C unter starker Rührung langsam vermischt. Nach 30 Minuten wird auf 40 °C gekühlt und 7,5 ml Lösung C und 10 ml Ethanol hinzugefügt. Nach einer kurzen Rührzeit werden 2 ml Salpetersäure (2%ig) und 0,1 ml einer 20%igen essigsauren Zirkoniumacetatlösung zugemischt und 5 Minuten intensiv gerührt.

Dieses Beschichtungsmedium besitzt ein Verhältnis von Silberverbindung zu Bindemittel von 3032 : 1. Es kann ohne weitere Verdünnung entsprechend Beispiel 1 auf eine Folie aufgebracht und die Laseraufzeichnung verwendet werden.
Soll die Beschichtung nach dem Sprühverfahren erfolgen, so wird das Beschichtungsmedium vor der Anwendung im Mengenverhältnis 1 : 1 mit Ethanol vermischt.

### Beispiel 3

Lösung A : 5 g Silberfluorid werden in 100 ml destilliertem Wasser, dem vorher 10 ml Salpetersäure (2%ig) hinzugefügt wurden, bei Zimmertemperatur gelöst.
Lösung B : 0,1 g Polyethylenglykol mit dem mittleren Molekulargewicht von 8 Millionen werden zunächst bei Zimmertemperatur 2 Stunden lang in 100 ml einer Mischung aus 50 ml Wasser und 50 ml 1-Methoxy-2-propanol angequollen und anschließend unter Rühren bei 70°C kolloid gelöst.
Lösung C : 10 ml Alkylphenylpolyethylenglykol werden mit Ethanol zu 100 ml gelöst.

Zur Herstellung des Beschichtungsmediums werden 8 ml von Lösung A mit 5 ml Lösung B durch Rühren bei 50°C intensiv vermischt. Danach erfolgt die Zugabe von 2 ml Lösung C. Das entstandene Beschichtungsmedium wird filtriert und steht für die Anwendung entsprechend den Beispielen 1 und 2 zur Verfügung. Es besitzt ein Silberverbindung-Bindemittel-Verhältnis von 80' : 1

### Beispiel 4

Lösung A : 2 g Silbernitrat werden bei Zimmertemperatur in 98 ml Ethanol gelöst
Lösung B : 10 g Polyvinylbutyral mit einem Acetalgehalt von ca. 77% werden bei Zimmertemperatur in 90 ml Ethanol gelöst Zur Herstellung des Beschichtungsmediums werden werden 9 ml der Lösung B vorgelegt und 9 ml der Lösung A eingerührt. Anschließend werden noch 0,35 ml Additol XL 104 als Plastifikator unter Rühren zugesetzt.
Die entstandene Mischung wird nach Filtration auf eine 100 µm starke PET-Folie beschichtet und getrocknet. Für die Laserbeschriftung wird die silbernitrathaltige Bindemittelschicht von der Unterlage abgezogen, auf das zu beschriftende Glas appliziert und in der im Beispiel 1 angegebenen Weise mit Laserlicht bestrahlt. Das hergestellte Beschichtungsmedium entspricht einem Silberverbindung Bindemittelverhältnis von 1 : 5

### Beispiel 5

Lösung A : 2 g Hyaluronsäure werden in 100 ml kaltem Wasser 4 Stunden angequollen und anschließend durch Erwärmen auf 70°C unter starker Rührung zu einer homogenen Masse verflüssigt.
Lösung B 50 g Silbernitrat werden mit destilliertem Wasser zu 100 ml bei Zimmertemperatur gelöst.
Lösung C : 4 g Natrium-sulfobernsteinsäure-2-ethylhexanolester werden in 100 ml Wasser gelöst.

Zur Herstellung des Beschichtungsmediums werden Lösung A und Lösung B intensiv sowie 10 ml Lösung C zu einer homogenen Masse vermischt.

Dieses pastenartige Beschichtungsmedium mit einem Silbernitrat-Hyaluronsäureverhältnis von 25 : 1 wird auf das zu beschriftende Glas aufgebracht und getrocknet. Anschließend erfolgt die Laserbestrahlung, die entsprechend der Computersteuerung im Glas zu einer Aufzeichnung fährt.

## Patentansprüche

1. Beschichtungszusammensetzung, insbesondere für eine lasergestützten Bearbeitung von Glasoberflächen, die mindestens eine Silberverbindung, die in einem wässrigen und/oder organischen Lösungsmittel lösbar ist, und mindestens ein Bindemittel enthält.

2. Beschichtungszusammensetzung nach Anspruch 1, die mindestens eine zusätzliche Metallverbindung enthält.

3. Beschichtungszusammensetzung nach Anspruch 2, bei der die zusätzliche Metallverbindung eine Zirkoniumverbindungen umfasst.

4. Beschichtungszusammensetzung nach einem der vorhergehenden Ansprüche, bei der das mindestens eine Bindemittel natürliche und/oder künstliche Polymere umfasst.

5. Beschichtungszusammensetzung nach einem der vorhergehenden Ansprüche, die mindestens eine Zusatzsubstanz enthält, mit der die Viskosität, das Volumen, die Trocknungs- und Verdampfungsgeschwindigkeit, die Benetzbarkeit und/oder die Haltbarkeit der Beschichtungszusammensetzung beeinflussbar ist.

6. Beschichtungszusammensetzung nach einem der vorhergehenden Ansprüche, die mindestens ein Reduktionsmittel enthält, mit dem Metallionen der mindestens einen Silberverbindung oder der zusätzlichen Metallverbindung reduzierbar sind.

7. Beschichtungszusammensetzung nach Anspruch 6, bei der das mindestens eine Reduktionsmittel Kupfer(I)- und/oder Zinn(II)- und/oder Eisen(II)- und/oder Blei(II)- und/oder Kobalt(II)- und/oder Titan(II)- und/oder Komplexsysteme wie Iridium(II)hexachlorid und/oder Cyanoferrate(II) umfasst.

8. Beschichtungszusammensetzung nach einem der vorhergehenden Ansprüche, die einen Zusatz von Farbstoffen und/oder Pigmenten enthält.

9. Beschichtungszusammensetzung nach einem der vorhergehenden Ansprüche, die einen Zusatz von Haftverbesserern und/oder Netzmitteln enthält.

10. Beschichtungszusammensetzung nach einem der vorhergehenden Ansprüche, die ein Silberverbindung-Bindemittel-Gewichtsverhältnis im Bereich von 0,05 bis 8000 aufweist.

11. Beschichtungszusammensetzung nach Anspruch 10, bei der das Silberverbindung-Bindemittel-Gewichtsverhältnis im Bereich von 1 bis 4000 liegt.

12. Verfahren zur lasergestützten Bearbeitung einer Glasoberfläche, mit den Schritten:
- Beschichtung der Glasoberfläche mit einer Beschichtungszusammensetzung nach einem der vorhergehenden Ansprüche, und
- Bestrahlung der beschichteten Glasoberfläche mit Laserstrahlung entsprechend einem vorbestimmten Bestrahlungsmuster bestehend aus bestrahlten und nicht bestrahlten Bereichen derart, dass in den bestrahlten Bereichen Silberionen in die Glasoberfläche diffundieren.

13. Verfahren nach Anspruch 12, bei der die Beschichtung der Glasoberfläche einen Auftrag der Beschichtungszusammensetzung im flüssig gelösten Zustand umfasst.

14. Verfahren nach Anspruch 13, bei der der Auftrag der Beschichtungszusammensetzung ein Aufsprühen, Ausgießen, Aufwalzen oder Aufrakeln umfasst.

15. Verfahren nach Anspruch 12, bei der die Beschichtung der Glasoberfläche einen Auftrag der Beschichtungszusammensetzung im festen Schichtzustand umfasst.

16. Verfahren nach Anspruch 15, bei der der Auftrag der Beschichtungszusammensetzung ein Anhaften einer selbsttragenden Folie der Beschichtungszusammensetzung auf der Glasoberfläche umfasst.

17. Verfahren nach Anspruch 15, bei der der Auftrag der Beschichtungszusammensetzung ein Anhaften eines Verbundes aus der Beschichtungszusammensetzung und einer Trägerfolie auf der Glasoberfläche umfasst.

18. Verfahren nach Anspruch 17, bei der die Trägerfolie nach der Bestrahlung von der Glasoberfläche abgezogen wird.

19. Verfahren zur Herstellung einer Beschichtungszusammensetzung nach einem der vorhergehenden Ansprüche, mit den Schritten:
- Bereitstellung eines Gemisches aus einer ersten Lösung der mindestens einen Silberverbindung in einem wässrigen und/oder organischen Lösungsmittel, und einer zweiten Lösung des mindestens einen Bindemittels in einem wässrigen und/oder organischen Lösungsmittel,
- Beschichtung einer Trägeroberfläche mit dem Gemisch, und
- Lösungsmittelentzug.

20. Verfahren nach Anspruch 19, bei der die Beschichtung einen Auftrag auf einer zu bearbeitenden Glasoberfläche oder einen Auftrag auf einer Trägerfolie umfasst.

## Claims

1. Coating composition, especially for laser-supported treatment of glass surfaces, said composition containing at least one silver compound, which is soluble in an aqueous and/or organic solvent, and at least one binder.

2. Coating composition according to claim 1, which contains at least one additional metal compound.

3. Coating composition according to claim 2, wherein the additional metal compound comprises a zirconium compound.

4. Coating composition according to one of the preceding claims, wherein the at least one binder comprises natural and/or synthetic polymers.

5. Coating composition according to one of the preceding claims, which contains at least one additive for influencing the viscosity, the volume, the rate of drying and of evaporation, the wettability and/or the stability of the coating composition.

6. Coating composition according to one of the preceding claims, which contains at least one reducing agent with which metal ions of the at least one silver compound or of the additional metal compound may be reduced.

7. Coating composition according to claim 6, in which the at least one reducing agent is a copper(I) and/or tin(II) and/or iron(II) and/or lead(II) and/or cobalt(II) and/or titanium(II) system and/or comprises a complex system such as iridium(II) hexachloride and/or cyanoferrates(II).

8. Coating composition according to one of the preceding claims, which contains an additive of a dye and/or pigment.

9. Coating composition according to one of the preceding claims, which contains an additive of an adhesion-improving agent and/or wetting agent.

10. Coating composition according to one of the preceding claims which has a silver compound/binder weight ratio in the range between 0.05 and 8000.

11. Coating composition according to claim 10, wherein the silver compound/binder weight ratio is in the range between 1 and 4000.

12. Method for the laser-supported treatment of a glass surface, comprising the steps:
- coating the glass surface with a coating composition according to one of the preceding claims, and
- treating the coated glass surface with laser radiation according to a predetermined irradiation pattern comprising irradiated and non-irradiated regions, in such a way that silver ions are diffused into the glass surface in the irradiated regions.

13. Method according to claim 12, wherein coating the glass surface comprises applying the coating composition when it is in a dissolved liquid state.

14. Method according to claim 13, wherein the application of the coating composition involves spraying, casting, rolling or knife-coating.

15. Method according to claim 12, wherein coating the glass surface comprises applying the coating composition in a solid layer state.

16. Method according to claim 15, wherein the application of the coating composition includes adhesion of a self-supporting film containing the coating composition to the glass surface.

17. Method according to claim 15, wherein the application of the coating composition includes adhesion of a composite comprising the coating composition and a carrier film to the glass surface.

18. Method according to claim 17, wherein the carrier film is removed from the glass surface after the irradiation step.

19. Method for producing a coating composition according to one of the preceding claims, comprising the steps:
- preparing a mixture of a first solution of the at least one silver compound in an aqueous and/or organic solvent, and of a second solution of the at least one binder in an aqueous and/or organic solvent,
- coating a carrier surface with the mixture, and
- removing the solvent.

20. Method according to claim 19, wherein the coating step comprises applying the composition to a glass surface to be treated or on a carrier film.

## Revendications

1. Composition de revêtement, en particulier pour un traitement au laser de surfaces en verre qui contiennent au moins un composé argent qui est soluble dans un solvant aqueux et/ou organique, et au moins un agent liant.

2. Composition de revêtement selon la revendication 1, contenant au moins un composé métallique supplémentaire.

3. Composition de revêtement selon la revendication 2, dans laquelle le composé métallique supplémentaire comprend un composé zirconium.

4. Composition de revêtement selon l'une quelconque des revendications précédentes, dans laquelle au moins l'agent liant comprend des polymères naturels et/ou synthétiques.

5. Composition de revêtement selon l'une quelconque des revendications précédentes, contenant au moins une substance supplémentaire avec laquelle on peut influer sur la viscosité, le volume, la vitesse de séchage et d'évaporation, la mouillabilité et/ou la durée de la composition de revêtement.

6. Composition de revêtement selon l'une quelconque des revendications précédentes, contenant au moins un agent réducteur avec lequel on peut réduire les ions métalliques au moins du composé argent ou du composé métallique supplémentaire.

7. Composition de revêtement selon la revendication 6, dans laquelle au moins l'agent réducteur comprend le cuivre (I) et/ou le zinc (II) et/ou le fer (II) et/ou le plomb (II) et/ou le cobalt (II) et/ou le titane (II) et/ou des systèmes complexes tels que l'hexachlorure d'iridium (II) et/ou le cyanoferrate (II).

8. Composition de revêtement selon l'une quelconque des revendications précédentes, comprenant l'addition de colorants et/ou de pigments.

9. Composition de revêtement selon l'une quelconque des revendications précédentes, comprenant l'addition d'agents favorisant l'adhérence et/ou d'agents mouillants.

10. Composition de revêtement selon l'une quelconque des revendications précédentes, qui présente un rapport en poids du composé argent à l'agent liant de l'ordre de 0,05 à 8000.

11. Composition de revêtement selon la revendication 10, dans laquelle le rapport en poids du composé argent à l'agent liant est de l'ordre de 1 à 4000.

12. Procédé de traitement au laser d'une surface en verre, comprenant les étapes de :
- revêtement de la surface en verre avec une composition de revêtement selon l'une quelconque des revendications précédentes, et
- irradiation de la surface en verre revêtue, par rayon laser selon un schéma prédéterminé consistant en zones irradiées et non irradiées de telle sorte que dans les zones irradiées, des ions argent se diffusent dans la surface en verre.

13. Procédé selon la revendication 12, dans lequel le revêtement de la surface en verre comprend l'application de la composition de revêtement à l'état dissous liquide.

14. Procédé selon la revendication 13, dans lequel l'application de la composition de revêtement comprend une pulvérisation, un moulage, un laminage ou un apprêtage à la racle.

15. Procédé selon la revendication 12 dans lequel le revêtement de la surface en verre comprend une application de la composition de revêtement à l'état d'une couche solide.

16. Procédé selon la revendication 15, dans lequel l'application de la composition de revêtement comprend un collage d'une feuille autoporteuse de la composition de revêtement sur la surface en verre.

17. Procédé selon la revendication 15, dans lequel l'application de la composition de revêtement comprend un collage d'un composite constitué de la composition de revêtement et d'une feuille porteuse sur la surface en verre.

18. Procédé selon la revendication 17, dans lequel la feuille porteuse est retirée après irradiation de la surface en verre.

19. Procédé de fabrication d'une composition de revêtement selon l'une quelconque des revendications précédentes, comprenant les étapes de :
- mise à disposition d'un mélange constitué d'une première solution d'au moins un composé argent dans un solvant aqueux et/ou organique, et d'une deuxième solution d'au moins un agent liant dans un solvant aqueux et/ou organique,
- revêtement d'une surface porteuse avec le mélange et
- retrait du solvant.

20. Procédé selon la revendication 19, dans lequel le revêtement comprend une application sur une surface en verre à traiter ou une application sur une feuille porteuse.
